# EUROPEAN PATENT APPLICATION

(11) **EP 4 614 012 A2**
(43) Date of publication of application: **10.09.2025**
(21) Application number: 25162598.4
(22) Date of filing: 10.03.2025
(51) Int. Cl.: F16C 7/02, F16B 7/00

(54) **THREE PIECE COMPOSITE FITTING**

(30) Priority: 08.03.2024 US 202463562985 P; 17.02.2025 US 202519055233
(71) Applicant: Avtechtyee, Inc., Everett, WA 98203 (US)
(72) Inventor: RAFINER, Nicolas Karl, Mill Creek, WA 98012 (US)
(74) Representative: Calysta NV

(57) **Abstract**

A fitting includes an annular composite interface (36) having a first end opposite a second end. A first insert (32) is at least partially within the composite interface and is couple or threaded to a second insert (34) such that a portion to the composite interface (36) is sandwiched between the first and second inserts. A method of forming such fitting includes 3D printing the annular composite interface.

## Description

### CROSS-REFERENCE TO RELATED APPLICATION

This application is based upon and claims priority to U.S. Provisional Application No. 63/562,985, filed on March 8, 2024, the contents of which are fully incorporated herein by reference.

### BACKGROUND

In vehicles such as aircraft, it is beneficial to use control rods or linkages in the form of composite tube assemblies rather than metal tube assemblies. They are lighter and stronger than comparable metal tube assemblies. The composite tube assemblies typically incorporate carbon fiber tubes and are lighter in weight, more resistant to corrosion, stronger and more inert relative to substantially metallic tube assemblies. Composite tube assemblies may be used in multiple applications, as for example as control rods or in an overhead luggage bin (or stow bin) assemblies in an aircraft to provide structural support both when the bin is in an open configuration and when it is closed. The composite tube assemblies may also be used as structural members in vehicle frames.

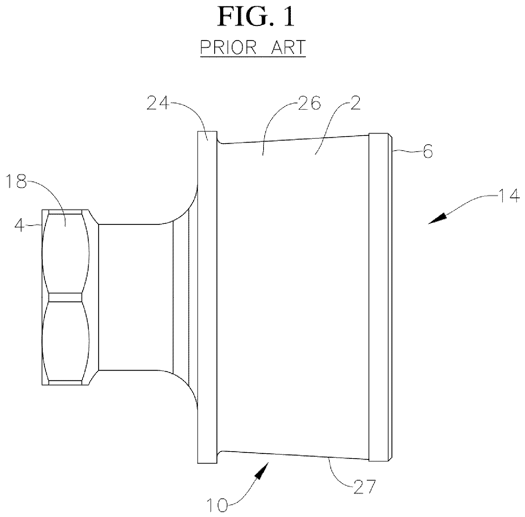

Composite tube assemblies incorporate a fitting or insert (individually and collectively referred to herein for convenience as "fitting"), such as a Hylock fitting, at each end. A clevis bolt or other type of connecting member is connected to each fitting at either end. A typical fitting is described on U.S. Patent No. 8,205,315, the contents of which are fully incorporated herein by reference. An example fitting 10 has an axially extending body 2 extending from a first end 4 to a second end 6, as for example shown in FIG. 1. Thus, a central longitudinal axis 14 of the fitting extends from the first end 4 to the second end 6. A flange 24 extends radially at a location between the first and second ends. A hex head 18 extends from the first end toward the flange. A section 26 of the fitting defined between the flange and the second end is a tapered section defined by a tapered outer surface 27 tapering from a smaller diameter to a larger diameter in a direction toward the second end. In use, the tapered section of the fitting is received within an end of a composite tube such that the end of the composite tube abuts the flange and the inner surface of the composite tube is compressed over the fitting and engages the tapered outer surface of the tapered section of the fitting. Typical fitting are machined from titanium and thus, tend to be heavy. Lighter fittings are desired.

### SUMMARY

In an example embodiment a fitting includes an annular composite interface having a first end opposite a second end. The fitting also includes a first insert having a threaded inner surface and including, a first section extending over the first end, and a second section extending from the first section. The second section penetrates the annular composite interface. A second insert is within the annular composite interface and is coupled to the first insert second section. In a further example embodiment, the second section has a threaded outer surface and the second insert is threaded to the threaded outer surface of the first insert second section. In another example embodiment, a portion of the annular composite interface is sandwiched between the first insert first section and the second insert. In yet another example embodiment, the second insert is at least partially embedded within the annular composite interface. In a further example embodiment, the second insert is rotationally retained within the annular composite interface. In yet a further example embodiment, the second insert is axially retained within the annular composite interface. In one example embodiment, the annular composite interface is formed by 3D printing. In another example embodiment, the annular composite interface is formed by 3D printing using onyx plastic and a continuous fiber. In yet another example embodiment, the continuous fiber is selected from the group of fibers consisting essentially of carbon, Kevlar and fiberglass fibers. In a further example embodiment, the composite interface is 3D printed with its longitudinal axis at an angle between 10 to 65 degrees relative to an axis perpendicular to a print bed it is printed on. In yet a further example embodiment, the annular composite interface includes an outer surface tapered at a first angle for mating with the inner surface of a composite tube and the first insert threaded inner surface is for threading a connecting member. In one example embodiment, the annular composite interface includes an inner surface tapered at a second angle, wherein the second angle is the same as the first angle. In another example embodiment, the annular composite interface includes a flange extending radially from its outer surface. In yet another example embodiment, the first insert first section is a polygonal head. In a further example embodiment, the second insert includes at least a projection or a depression and is mated with the other of a depression or a projection formed in the annular composite interface. In yet a further example embodiment, the annular composite interface is 3D printed over the second insert. In another example embodiment, the first and second inserts are made of metal.

In an example embodiment, a method of forming a fitting includes 3D printing an annular composite interface having a first end opposite a second end, inserting a first insert having a threaded inner surface in the annular composite interface through the first end such that a first section of the first insert extends over the first end and a second section extends from the first section within the annular composite interface, and coupling the first insert second section to a second insert for sandwiching a portion of the annular composite interface between the first section of the first insert and the second insert. In a further example embodiment, coupling includes threading the first insert second section to the second insert. In another example embodiment, 3D printing the annular composite interface includes 3D printing a first section of the annular composite interface having a first step, placing the second insert in the first section and over the first step, and 3D printing a second section of the annular composite interface having a second step, such that the second insert is sandwiched between the first and second steps. In yet another example embodiment, the method also includes mating an inner surface of a tube to an outer surface of the 3D printed composite interface. In a further example embodiment, the outer surface of the 3D printed composite interface tapers from a smaller diameter to a larger diameter in a direction from the first end toward the second end. In yet a further example embodiment, the tube is a carbon composite tube.

### BRIEF DESCRIPTION OF THE DRAWINGS

FIG. 1 is a side view of a prior art fitting.
FIGS. 2A, 2B, and 2C are a side view, a cross-sectional view, and an exploded view, respectively, of an example embodiment three-piece fitting.
FIGS. 3A and 3B are a top view and a side view, respectively, of an example embodiment second insert for use in the three-piece fitting shown in FIGS. 2A, 2B, and 2C.
FIG. 4 is a cross-sectional view of an example embodiment annular composite interface used in an example embodiment three-piece fitting.
FIG. 5A is an exploded view of a partially 3D printed annular composite interface over a print bed and second insert of another example embodiment three-piece fitting.
FIG. 5B is a cross-sectional view of the partially 3D printed annular composite interface as shown in FIG. 5A with the second insert installed therein.
FIG. 5C is a cross-sectional view of a fully 3-D printed annular composite interface with an embedded second insert shown in FIGS. 5A and 5B.
FIGS. 5D and 5E are a side view and cross-sectional view, respectively, of an example embodiment fitting including the 3D printed annular composite interface shown in FIG. 5C.

### DESCRIPTION

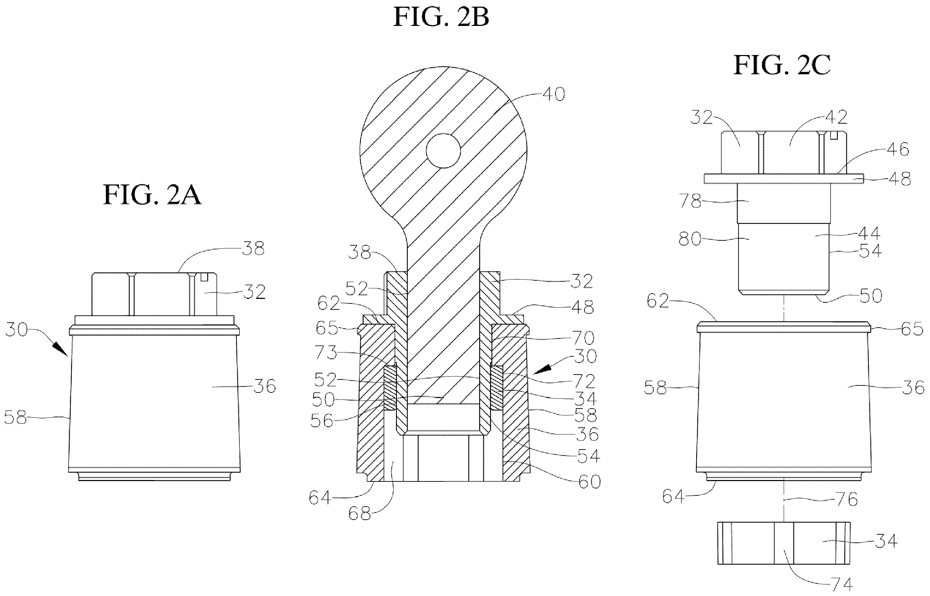

In an example embodiment, a three-piece fitting 30 is provided that has a first insert 32, a second insert 34, and an annular composite interface 36, as for example shown in FIGS. 2A, 2B, and 2C. In an example embodiment, the composite interface 36 is 3D printed. 3D printing of objects is well known in the art. 3D printing is an additive manufacturing process that creates a physical object from a digital design. The process works by laying down thin layers of material in the form of liquid or powdered plastic, metal, fiber or cement, and then fusing the layers together. Each layer is laid along a horizontal plane, i.e., a plane perpendicular to the vertical. An example embodiment composite interface is 3-D printed using Onyx plastics or nylons reinforced with a continuous fiber. Example Onyx plastics on nylons are Onyx FR and Onyx FR-A and continuous fibers are Carbon Fiber FR and Carbon Fiber FR-A provided by Markforged. In an example embodiment the continuous fiber may also be a carbon fiber, Kevlar or fiberglass fiber.

In an example embodiment, the first insert penetrates the composite interface. The second insert is connected to the first insert interlocking the first insert, the composite interface and the second insert. In an example embodiment, the first insert defines a first end 38 of the fitting and allows for the connection of a connecting members such as a clevis bolt or end rod 40. In the example embodiment as shown in FIG. 2C, the first insert 32 has a first portion 42 which in an example embodiment is a a polygonal head, such as the shown hex head. A second portion 44 extends axially from the first portion 42. In an example embodiment as shown in FIG. 2C, a flange 48 extends radially between the first and second portions. In the shown example embodiment, the first portion or polygonal head has a larger outer dimension than the second portion, thus defining a flange surface 46 that interfaces with the flange 48. An axial passage 50 is defined through the first and second sections 42, 44 (see FIGS. 2B and 2C). In an example embodiment, an inner surface 52 of the axial passage 50 is threaded to allow for the threaded coupling with a connecting member such a clevis bolt or end rod 40. An outer surface 54 of the second portion 44 opposite the axial passage threaded inner surface is also threaded, allowing for the threading of the second insert thereto. In an example embodiment, the threads on the outer surface 54 are opposite the threads on the inner surface 52 of the axial passage 50.

The second insert 34 is an annular member having a threaded inner surface 56 for threading to the outer surface 54 of the second section of the first insert 32. In an example embodiment, both inserts are metallic inserts. In yet a further example embodiment, the inserts are made from corrosive resistant metal not far enough on the galvanic scale so as to alleviate any concerns that arise due to contact with carbon fiber of the annular composite interface. In an example embodiment both inserts are made from stainless steel.

In another example embodiment, the outer surface of the second section of the first insert is coupled with the inner surface of the second insert without including threads.

The composite interface 36 is an annular member having an outer surface 58 and an inner surface 60 for receiving the first and second inserts 32, 34. Specifically, the inner surface may have any geometry that allows it to interface with the inserts. In an example embodiment as shown in FIGS. 2A, 2B, and 2C, the composite interface 36 has a first end 62 opposite a second end 64. In an example embodiment, the composite interface outer surface 58 is a tapering outer surface that tapers from a smaller diameter to a larger diameter in a direction from its first end 62 toward its second end 64. In an example embodiment, the composite interface outer surface 58 may also have projections and/or depressions. In one example embodiment, the composite interface outer surface includes a plurality of spaced apart annular grooves extending about the central longitudinal axis. In another example embodiment, the composite interface outer surface has a helical groove extending around it and from or proximate the second end 64 toward the first end 62. In an example embodiment an annular flange 65 is defined at, or proximate, the first end 62.

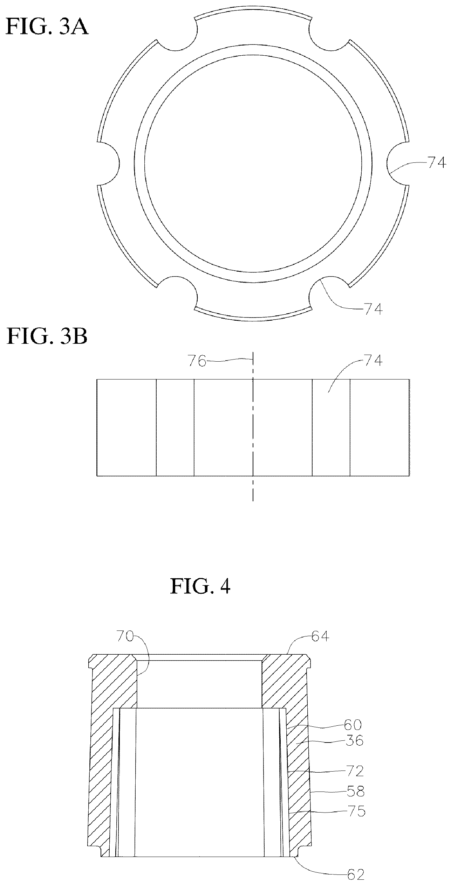

The composite interface 36 has an internal opening 68 having a first section 70 having a first diameter extending from the first end 62 for receiving the second section 44 of the first insert 32, as for example shown in FIG. 2B. The internal opening has a second section 72 extending from the internal opening first section 70 to the composite interface second end 64, defining an annular step 73. The internal opening second section has a second diameter greater than the first diameter of the internal opening first section, thus defining the annular step 73. In an example embodiment, the outer surface of the second insert 34 has a plurality of depressions 74, as for example shown in FIGS. 2C, 3A and 3B. A plurality of projections (not shown) extend radially inward from the composite interface internal opening second section 72. The second insert is placed in the composite interface such that the projections are received in the depressions, thus preventing the second insert from rotating about its central longitudinal axis 76 relative to the composite insert interface. The first insert is placed with its second section in the internal opening 68 of the composite interface through the first end and is threaded into the second insert which is prevented from rotating about its central longitudinal axis by the annular composite inteface. The first insert in threaded into the second insert until the flange 48 of the first insert sits against the first end 62 of the composite interface and the second insert exerts a pressure against the annular step 73 of the composite interface forming the three-piece fitting. The three-piece fitting may then be inserted into an end of a composite tube such the composite tube end engages the flange 65 of the composite interface and the inner surface of the composite tube is compressed over the outer surface 58 of the composite interface.

In another example embodiment, the outer surface of the second insert may have projections and the internal opening second section 72 of the composite interface may have depressions for receiving the projections for preventing the rotation of the second insert about its central longitudinal axis relative to the annular composite interface. In other example embodiments, the outer surface of the second insert may be non-circular or polygonal and the annular composite interface inner surface may be complementary to the outer surface of the second insert. In this regard, when the second insert is inserted into the annular composite interface it is prevented from rotating about its central longitudinal axis by the annular composite interface.

In an example embodiment, the second section 44 of the first insert 32 has a first portion 78 extending from the flange 48 having an outer surface diameter and a second portion 80 extending axially and distally from the first portion 78 and having a smaller outer surface diameter than the first portion, as for example shown in FIG. 2C. When the three-piece fitting is assembled, as for example shown in FIG. 2B, the first portion 78 is adjacent to the first section 70 of the internal opening 68 of the composite interface and the second portion 80 is threaded to an inner surface of the second insert. Specifically, the threaded outer surface 54 of the first insert second portion on which is threaded the second insert is defined on the second portion 80.

In an example embodiment, an inner surface 75 of the internal opening second section 72 of the 3D Printed composite interface is tapered at the same angle as the outer surface 58 of the composite interface, as for example shown in FIG. 4, to maintain a constant wall thickness and to help prevent the second insert from being installed in the wrong direction relative to the composite interface, by providing a complementary taper to the outer surface of the second insert.

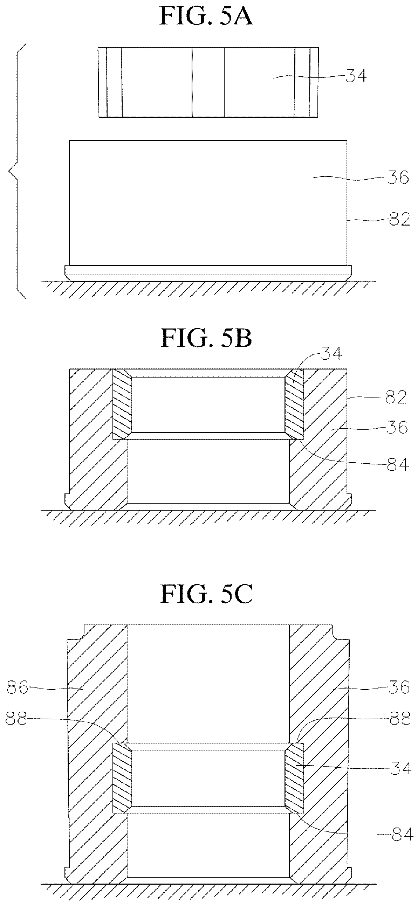

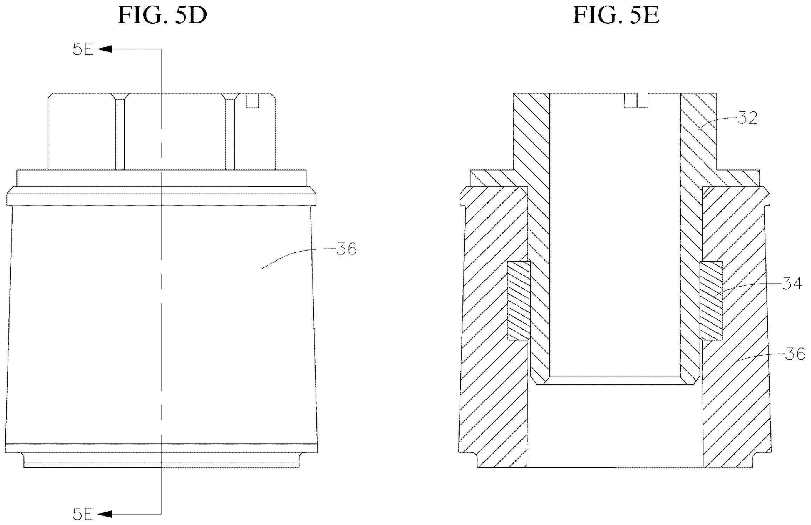

In another example embodiment, the second insert 34 is embedded within the composite interface 36, as for example shown in FIG. 5C. With this example embodiment, a first portion 82 of the composite interface is formed by 3D printing and the second insert 34 is positioned within the 3D printed first portion 82, as for example shown in FIGS. 5A and 5B. In an example embodiment a first step 84 is defined within the first portion 82 on which is seated the second insert. The second insert may have the appropriate projections and/or depressions on its outer surface that are mated with corresponding depressions and/or projections on the first portion so as to prevent the second insert from rotating about its central longitudinal axis relative to the first portion. A remainder portion 86 of the composite interface is then 3D printed over the second insert, as for example shown in FIGS. 5C, 5D, and 5E. A second annular step 88 may be formed in the remainder portion such that the insert is sandwiched between the first and second steps 84, 88 so as to prevent or limit axial movement of the second insert. The first insert 32 is then inserted through the first end of the fitting and threaded onto the embedded second insert 34, as for example shown in FIG. 5E. In an example embodiment the second insert may not have any projections and/or depressions on its outer surface is retained from rotating about its central longitudinal axis relative to the composite interface by the interference fit created by the aforementioned process of embedding the second insert in the composite interface. In other example embodiments, the outer surface of the second insert may be non-circular or polygonal and the annular composite interface inner surface may be complementary to the outer surface of the second insert. In this regard, when the second insert is inserted into the annular composite interface it is prevented from rotating about its central longitudinal axis by the annular composite interface.

In an example embodiment in order to improve the axial tensile strength, the torsional strength and the shear strength of the 3D printed composite interface, the composite interface is formed by 3D printing it at an angle. In other words, the composite interface is formed on a horizontal print bed by laying horizontal layers but with its longitudinal axis at an angle relative to the vertical. In an example embodiment, this angle is between 10 to 65 degrees. Applicant's believer that they will optimize the axial tensile, torsional and shear strength of the composite interface by 3D printing it at an angle of 45 degrees. In an example embodiment, a three-piece fitting of any example embodiment described herein has an axial strength of at least 9000 lbf. In another example embodiment, a composite tube assembly incorporating any of the aforementioned example embodiment three-piece fittings has an axial strength of at least 300 lbf. In a further example embodiment, a composite tube assembly incorporating any of the aforementioned example embodiment three-piece fittings has an axial strength of at least 500 lbf.

The example embodiment three-piece fittings have less weight and cost versus typically machined composite tube inserts which are typically machined from titanium so as to not be corrosive when in contact with the carbon fiber composite tube. By using a composite interface, the metallic content of the insert is minimized while avoiding corrosion concerns due contact of the fitting and the composite tube.

While three-piece fittings have been described herein in detail with particular references to example embodiments thereof, the example embodiments described herein are not intended to be exhaustive or to limit the scope of the invention to the exact forms disclosed. Persons skilled in the art and technology to which this invention pertains will appreciate that alterations and changes in the described structures and methods of assembly and operation can be practiced without meaningfully departing from the principles, spirit, and scope of this invention, as set forth in the following claims. Although relative terms such as "outer," "inner," "upper," "lower," "below," "above," and similar terms have been used herein to describe a spatial relationship of one element to another, it is understood that these terms are intended to encompass different orientations of the various elements and components of the invention in addition to the orientation depicted in the figures. Additionally, as used herein, the term "substantially," "about," and similar terms are used as terms of approximation and not as terms of degree, and are intended to account for the inherent deviations in measured or calculated values that would be recognized by those of ordinary skill in the art. Furthermore, as used herein, when a component is referred to as being "on" another component, it can be directly on the other component or components may also be present therebetween. Moreover, when a component is component is referred to as being "coupled" to another component, it can be directly attached to the other component or intervening components may be present therebetween.

The invention can for example be summarized by one or more of the following clauses:
1. A fitting comprising:
   an annular composite interface having a first end opposite a second end;
   a first insert having a threaded inner surface and comprising,
   a first section extending over the first end, and
   a second section extending from the first section, wherein said second section penetrates the annular composite interface; and
   a second insert within the annular composite interface and coupled to the first insert second section.
2. The fitting of clause 1 wherein the second section has a threaded outer surface and wherein the second insert is threaded to the threaded outer surface of the first insert second section.
3. The fitting of clause 1 or clause 2, wherein a portion of the annular composite interface is sandwiched between the first insert first section and the second insert.
4. The fitting of one or more of the preceding clauses, wherein the second insert is at least partially embedded within the annular composite interface.
5. The fitting of one or more of the preceding clauses, wherein the second insert is rotationally retained within the annular composite interface.
6. The fitting of one or more of the preceding clauses, wherein the second insert is axially retained within the annular composite interface.
7. The fitting of one or more of the preceding clauses, wherein the annular composite interface is formed by 3D printing.
8. The fitting of clause 7, wherein the annular composite interface is formed by 3D printing using onyx plastic and a continuous fiber.
9. The fitting of clause 8, wherein the continuous fiber is selected from the group of fibers consisting essentially of carbon, Kevlar and fiberglass fibers.
10. The fitting of clause 7, wherein the composite interface is 3D printed with its longitudinal axis at an angle between 10 to 65 degrees relative to an axis perpendicular to the print bed.
11. The fitting of one or more of the preceding clauses, wherein the annular composite interface comprises an outer surface tapered at a first angle for mating with the inner surface of a composite tube and wherein the first insert threaded inner surface is for threading a connecting member.
12. The fitting of clause 11, wherein said annular composite interface comprises an inner surface tapered at a second angle, wherein the second angle is the same as the first angle.
13. The fitting of one or more of the preceding clauses, wherein the annular composite interface comprises a flange extending radially from its outer surface.
14. The fitting of one or more of the preceding clauses, wherein the first insert first section is a polygonal head.
15. The fitting of one or more of the preceding clauses, wherein the second insert comprises at least a projection or a depression and is mated with the other of a depression or a projection of the annular composite interface.
16. The fitting of one or more of the preceding clauses, wherein the annular composite interface is 3D printed over the second insert.
17. The fitting of one or more of the preceding clauses, wherein the first and second inserts are made of metal.
18. A method of forming a fitting comprising:
   3D printing an annular composite interface having a first end opposite a second end;
   inserting a first insert having a threaded inner surface in the annular composite interface through the first end such that a first section of the first insert extends over the first end, and a second section extends from the first section is within the annular composite interface; and
   coupling the first insert second section to a second insert for sandwiching a portion of the annular composite interface between the first section of the first insert and the second insert.
19. The method of clause 18, wherein coupling comprises threading the first insert second section to the second insert.
20. The method of clause 18 or clause 19, wherein 3D printing the annular composite interface comprises:
   3D printing a first section of the annular composite interface having a first step;
   placing the second insert in the first section and over the first step; and
   3D printing a second section of the annular composite interface having a second step, wherein the second insert is sandwiched between the first and second steps.
21. The method of clause 20, further comprising mating an inner surface of a tube to an outer surface of the 3D printed composite interface.
22. The method of clause 21, wherein the outer surface of the 3D printed composite interface tapers from a smaller diameter to a larger diameter in a direction from the first end toward the second end.
23. The method of clause 21 or clause 22, wherein the tube is a carbon composite tube.

## Claims

1. A fitting comprising:
an annular composite interface having a first end opposite a second end;
a first insert having a threaded inner surface and comprising,
a first section extending over the first end, and
a second section extending from the first section, wherein said second section penetrates the annular composite interface; and
a second insert within the annular composite interface and coupled to the first insert second section.

2. The fitting of claim 1 wherein the second section has a threaded outer surface and wherein the second insert is threaded to the threaded outer surface of the first insert second section.

3. The fitting of claim 1, wherein a portion of the annular composite interface is sandwiched between the first insert first section and the second insert.

4. The fitting of claim 1, wherein the annular composite interface is formed by 3D printing.

5. The fitting of claim 4, wherein the annular composite interface is formed by 3D printing using onyx plastic and a continuous fiber selected from the group of fibers consisting essentially of carbon, Kevlar and fiberglass fibers.

6. The fitting of claim 4, wherein the composite interface is 3D printed with its longitudinal axis at an angle between 10 to 65 degrees relative to an axis perpendicular to the print bed.

7. The fitting of claim 1, wherein the annular composite interface comprises an outer surface tapered at a first angle for mating with the inner surface of a composite tube and wherein the first insert threaded inner surface is for threading a connecting member.

8. The fitting of claim 1, wherein the annular composite interface comprises a flange extending radially from its outer surface.

9. The fitting of claim 1, wherein the second insert comprises at least a projection or a depression and is mated with the other of a depression or a projection of the annular composite interface.

10. The fitting of claim 1, wherein the first and second inserts are made of metal.

11. A method of forming a fitting comprising:
3D printing an annular composite interface having a first end opposite a second end;
inserting a first insert having a threaded inner surface in the annular composite interface through the first end such that a first section of the first insert extends over the first end, and a second section extends from the first section is within the annular composite interface; and
coupling the first insert second section to a second insert for sandwiching a portion of the annular composite interface between the first section of the first insert and the second insert.

12. The method of claim 11, wherein coupling comprises threading the first insert second section to the second insert.

13. The method of claim 11, wherein 3D printing the annular composite interface comprises:
3D printing a first section of the annular composite interface having a first step;
placing the second insert in the first section and over the first step; and
3D printing a second section of the annular composite interface having a second step, wherein the second insert is sandwiched between the first and second steps.

14. The method of claim 13, further comprising mating an inner surface of a tube to an outer surface of the 3D printed composite interface.

15. The method of claim 14, wherein the outer surface of the 3D printed composite interface tapers from a smaller diameter to a larger diameter in a direction from the first end toward the second end.
